# EUROPEAN PATENT APPLICATION

(11) **EP 4 748 682 A1**
(43) Date of publication of application: **27.05.2026**
(21) Application number: 24842026.7
(22) Date of filing: 09.05.2024
(51) Int. Cl.: B62D 1/16

(54) **VEHICLE STEERING CONTROL MECHANISM**

(30) Priority: 19.07.2023 CN 202310896954
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LI, Fuhai, Ningbo, Zhejiang 315899 (CN); GENG, Mingxing, Ningbo, Zhejiang 315899 (CN); LUO, Lixin, Ningbo, Zhejiang 315899 (CN); MA, Zuguo, Ningbo, Zhejiang 315899 (CN); DING, Lei, Ningbo, Zhejiang 315899 (CN)
(74) Representative: Murgitroyd & Company
(86) International application number: PCT/CN2024/091945
(87) International publication number: WO 2025/016026

(57) **Abstract**

A vehicle steering control mechanism includes a shaft assembly (10) and a limiting assembly (20). The shaft assembly includes a first shaft body (11), a second shaft body (12), and an outer tube (13). The first shaft body (11) is configured to connect to a steering wheel, and the second shaft body (12) is coaxially connected to the first shaft body (11) and configured to move synchronously with the steering wheel. The second shaft body (12) is connected to the limiting assembly (20). The limiting assembly (20) is configured to limit a quantity of rotations of the steering wheel. The outer tube (13) is coaxially connected to the first shaft body (11) and the second shaft body (12). The second shaft body (12) is mounted in the outer tube (13), and at least part of the limiting assembly (20) is mounted in the outer tube (13). The mechanism may limit the quantity of rotations of the steering wheel, and has a small overall volume, thereby facilitating an arrangement.

## Description

### TECHNICAL FIELD

The present disclosure generally relates to the field of vehicle technologies, and in particular, to a vehicle steering control mechanism.

### BACKGROUND

A steering system is a crucial component of a vehicle, configured to control a driving direction of the vehicle to ensure stable straight-line travel and flexible maneuvering. Therefore, ease of operation, along with stability and reliability, are fundamental requirements for the steering system. Failure of the steering system may affect driving safety and, in severe cases, may lead to accidents.

### SUMMARY

In view of above, the present disclosure aims to provide a vehicle steering control mechanism that may limit a quantity of rotations of a steering wheel. The vehicle steering control mechanism has a simple structure, small size, and occupies little space, thereby facilitating installation within a constrained space of a vehicle cab.

Embodiments of the present disclosure provide a vehicle steering control mechanism. The vehicle steering control mechanism includes a shaft assembly and a limiting assembly. The shaft assembly includes a first shaft body, a second shaft body and an outer tube. The first shaft body is configured to connect to a steering wheel, and the second shaft body is coaxially connected to the first shaft body and configured to move synchronously with the steering wheel. The second shaft body is connected to the limiting assembly. The limiting assembly is configured to limit a quantity of rotations of a steering wheel. The outer tube is coaxially connected to the first shaft body and the second shaft body. The second shaft body is mounted in the outer tube, and at least part of the limiting assembly is mounted in the outer tube.

In an embodiment, the first shaft body includes a cavity, and the second shaft body includes a connecting segment and a transmission segment. The connecting segment is mounted in the cavity, and the transmission segment is configured to connect the first shaft body and the limiting assembly.

In an embodiment, the outer tube includes an accommodating cavity and a fixing slot, the accommodating cavity extends through two ends of the outer tube along an axial direction, the fixing slot extends through a side of a tube wall of the outer tube along a radial direction and communicates with the accommodating cavity, and the limiting assembly is mounted in the fixing slot and the accommodating cavity.

In an embodiment, the limiting assembly includes a first guide member and a second guide member, the first guide member and the second guide member are mounted in the fixing slot, an end, closer to the transmission segment, of the first guide member passes through the fixing slot and is located within the accommodating cavity, and the first guide member is configured to cooperate with the transmission segment to move along the axial direction relative to the second guide member when the second shaft body rotates around the axial direction.

In an embodiment, an end, closer to the transmission segment, of the first guide member is provided with a first thread, an outermost surface, in the radial direction, of the transmission segment is provided with a second thread, and the first thread engages with the second thread for transmission.

In an embodiment, an end, closer to the transmission segment, of the first guide member is provided with a first tooth member, an outermost surface, in the radial direction, of the transmission segment is provided with a second tooth member, and the first tooth member engages with the second tooth member for transmission.

In an embodiment, the end, closer to the transmission segment, of the first guide member is provided with a cutting groove extending through the first guide member along the axial direction, and the cutting groove is configured to cooperate with the outermost surface, in the radial direction, of the transmission segment.

In an embodiment, two ends, perpendicular to the axial direction, of the first guide member are provided with clamping pieces, the fixing slot is provided with a support platform cooperating with the clamping piece, and when the first guide member is mounted to the fixing slot, the clamping piece is in contact with the support platform and the clamping piece is clamped between the support platform and the second guide member.

In an embodiment, two ends, along the axial direction, of the fixing slot are provided with limiting blocks cooperating with the support platform, and when the first guide member moves along the axial direction to a position in contact with the limiting block, the steering wheel and the second shaft body are rotated to a limit position.

In an embodiment, the two ends, along the axial direction, of the fixing slot are provided with limiting grooves communicating with the fixing slot, a width of the limiting groove is less than a width of the fixing slot, and the limiting block is formed at a junction between the fixing slot and the limiting groove.

In an embodiment, one of the first guide member and the second guide member is provided with a guide groove, the other one of the first guide member and the second guide member is provided with a guide strip cooperating with the guide groove, and when the first guide member moves along the axial direction, the guide strip slidably engages within the guide groove.

In an embodiment, the second guide member includes a preloading member, the preloading member is configured to apply a force in the radial direction on the first guide member, to enable the first guide member to engage with the transmission segment.

In an embodiment, the preloading member includes a fastener, the fixing slot is provided with a first fastening hole, the second guide member is provided with a second fastening hole, the fastener is mounted in the first fastening hole and the second fastening hole to apply a force in the radial direction on the second guide member and the first guide member.

In an embodiment, the preloading member includes an elastic member arranged between the fastener and the second guide member, the fastener is configured to pass through the elastic member to mount the second guide member in the fixing slot, the fastener is configured to apply the force in the radial direction on the second guide member and the first guide member, and the elastic member is deformed and is configured to apply a force in the radial direction on the second guide member and the first guide member.

In an embodiment, the preloading member may further include a cover cap arranged on a side, facing away from the first guide member, of the second guide member in the radial direction, and enclosing the second guide member on the outer tube.

The present disclosure has the following beneficial effects:

The transmission between the limiting assembly and the steering wheel is achieved through the first shaft body and the second shaft body. By mounting at least part of the limiting assembly in the outer tube, a volume of an entire control mechanism may be reduced, making the overall footprint small and conducive to layout in the vehicle space. The limiting assembly may limit the quantity of rotations of the steering wheel, enhancing the user experience of the entire control system.

### BRIEF DESCRIPTION OF THE DRAWINGS

To more clearly illustrate the technical solutions of the embodiments of the present disclosure or the prior art, a brief description of accompanying drawings that are required in the embodiments will hereinafter be provided. It should be understood that the accompanying drawings described below are only some embodiments of the present disclosure; therefore, should not be regarded as a limitation on the scope. For those skilled in the art, they can obtain other drawings based on these accompanying drawings without creative labor.
FIG. 1 is a schematic diagram of an overall structure according to an embodiment of the present application.
FIG. 2 is a partially exploded view of a first shaft body and a second shaft body according to an embodiment of the present application.
FIG. 3 is an exploded view of a limiting assembly according to an embodiment of the present application.
FIG. 4 is a schematic structural diagram of an outer tube and a fixing slot of the outer tube according to an embodiment of the present application.
FIG. 5 is a cross-sectional view of an overall structure according to an embodiment of the present application.
FIG. 6 is a cross-sectional view of an overall structure of another angle according to an embodiment of the present application.
FIG. 7 is another exploded view of a limiting assembly according to an embodiment of the present application.
FIG. 8 is a cross-sectional view of an overall structure according to another embodiment of the present application.

Reference numerals:
10 - shaft assembly; 11 - first shaft body; 111 - cavity; 1111 - locating groove; 12 - second shaft body; 121 - connecting segment; 1211 - locating block; 122 - transmission segment; 13 - outer tube; 131 - accommodating cavity; 132 - fixing slot; 1321 - first fastening hole; 1322 - support platform; 1323 - limiting block; 133 - limiting groove;
20 - limiting assembly; 21 - first guide member; 211 - cutting groove; 212 - clamping piece; 213 - guide groove; 22 - second guide member; 221 - fastener; 222 - second fastening hole; 223 - elastic member; 224 - guide strip; 225 - cover cap; 2251 - third fastening hole; 2252 - projection.

### DETAILED DESCRIPTION OF THE EMBODIMENTS

The specific embodiments of the present disclosure may be described in detail below with reference to the accompanying drawings. Apparently, the described embodiments are a part rather than all of the embodiments of the present disclosure. Based on the description of the present disclosure, all other embodiments obtained by a person of ordinary skill in the art based on the embodiments of the present invention without creative efforts shall fall within the protection scope of the present invention.

In the description of the present disclosure, unless otherwise explicitly stipulated or limited, the terms "set", "mount", "connect", and the like should be understood in a broad sense. For example, the connection may be a fixed connection, a detachable connection, or an integrated connection; or may be a mechanical connection or an electrical connection; or may be directly connected or indirectly connected through an intermediate medium. For a person of ordinary skill in the art, the specific meanings of these terms can be understood based on specific circumstances.

The terms "up", "down", "left", "right", "front", "back", "top", "bottom", "in", "out", and the like indicate the orientation or positional relationship based on the orientation or positional relationship shown in the accompanying drawings, or the orientation or positional relationship that is commonly adopted when the invention product is in use. These terms are used merely for the convenience of describing the present application and simplifying the description, rather than indicating or implying that the device or component must have a specific orientation, be constructed and operated in a specific orientation. Therefore, these terms should not be construed as limitations on the present application.

The terms "first", "second", "third", and the like are merely used to distinguish components with similar attributes, and do not indicate or imply relative importance or a specific order.

The term "include", "comprise", or any of their variations is intended to cover non-exclusive inclusion. It means that in addition to the listed elements, other elements that are not explicitly mentioned may also be included.

A steering system usually includes a steering wheel and a supporting component connected to the steering wheel. The driver directly operates the steering wheel to achieve vehicle steering. The supporting component plays a role in controlling the rotation and providing support for the steering wheel. With the advancement of technology, line-controlled steering technology has been incorporated into the steering system. The line-controlled steering technology is configured to connect and control each component of the steering system through microelectronic technology, which replaced a traditional mechanical connection method and uses sensors to record steering data. Through frequent signal transmission and data comparison, a micro-control unit of the vehicle issues control instructions to steer the vehicle. The line-controlled steering technology has high sensitivity and improves the steering performance of the vehicle.

Since the line-controlled steering system eliminates a mechanical connection between the steering wheel and the supporting component, the steering wheel may rotate without any limit in terms of a quantity of rotations, which will affect driving safety. Therefore, it is necessary to limit the quantity of rotations of the steering wheel. However, chassis space in the vehicle cab is limited. If a structure for limiting the steering wheel is large in size, it may not be easy to mount and may bring great limitations to design of the vehicle.

In response to the problems mentioned above, embodiments of the present disclosure provide a vehicle steering control mechanism.

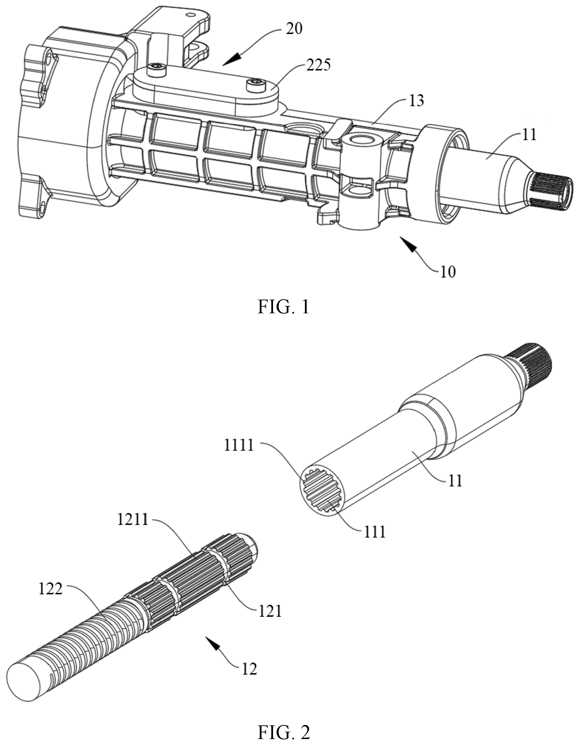

Referring to FIG. 1 and FIG. 2, the vehicle steering control mechanism provided in the embodiments of the present disclosure includes a shaft assembly 10 and a limiting assembly 20. The shaft assembly 10 includes a first shaft body 11, a second shaft body 12, and an outer tube 13. The first shaft body 11 is configured to connect to a steering wheel, and the second shaft body 12 is coaxially connected to the first shaft body 11. The first shaft body 11 and the second shaft body 12 move synchronously with the steering wheel. That is, when a user exerts an external force on the steering wheel to rotate the steering wheel around an axial direction, the first shaft body 11 and the second shaft body 12 may also rotate along with the steering wheel around the axial direction. The second shaft body 12 is configured to connect to the limiting assembly 20, and control a quantity of rotations of the steering wheel through the limiting assembly 20. The outer tube 13 is coaxially connected to the first shaft body 11 and the second shaft body 12. The second shaft body 12 is mounted in the outer tube 13, and at least part of the limiting assembly 20 is mounted in the outer tube 13. This arrangement ensures a compact size and minimal space occupation, facilitating installation within the vehicle.

It is understandable that the vehicle steering control mechanism provided in the embodiments of the present disclosure is applied to the steering system of the vehicle.

As shown in FIG. 2, the first shaft body 11 includes a cavity 111, and the second shaft body 12 includes a connecting segment 121 and a transmission segment 122. The connecting segment 121 is accommodated within the cavity 111. The connecting segment 121 cooperate with the cavity 111 to realize connection between the first shaft body 11 and the second shaft body 12, so that the first shaft body 11 and the second shaft body 12 may rotate synchronously around the axial direction with a strong connection and good synchronization. The transmission segment 122 is located outside the cavity 111. The transmission segment 122 is configured to connect the first shaft body 11 and the limiting assembly 20, to achieve transmission between the first shaft body 11 and the limiting assembly 20.

In an example of the present embodiment shown in FIG. 2, an outermost surface, along a radial direction, of the connecting segment 121 is provided with a locating block 1211. The cavity 111 is provided with a locating groove 1111 cooperating with the locating block 1211. When the connecting segment 121 is mounted in the cavity 111, the locating block 1211 engages with the locating groove 1111. The connection between the first shaft body 11 and the second shaft body 12 is achieved through a cooperation between the locating block 1211 and the locating groove 1111. Moreover, the first shaft body 11 and the second shaft body 12 may rotate synchronously around the axial direction with such simple structure, so that the connection is convenient and fast.

In another example of the present embodiment, an outermost surface, in the radial direction, of the connecting segment 121 is provided with a locating groove 1111. The cavity 111 is provided with a locating block 1211 cooperating with the locating groove 1111. When the connecting segment 121 is mounted in the cavity 111, the locating block 1211 engages with the locating groove 1111. The connection between the first shaft body 11 and the second shaft body 12 is achieved through a cooperation between the locating block 1211 and the locating groove 1111. Moreover, the first shaft body 11 and the second shaft body 12 may rotate synchronously around the axial direction with such simple structure, so that the connection is convenient and fast.

Exemplarily, a quantity of the locating blocks 1211 is equal to or greater than one, and a quantity of the locating grooves 1111 is equal to or greater than the quantity of the locating blocks 1211.

Exemplarily, as shown in FIG. 2, the connecting segment 121 is provided with the locating blocks 1211 radially distributed on an outermost surface, in the radial direction, of the connecting segment 121. In this way, the connection is stable and reliable, and the structure is convenient for installation.

Exemplarily, the cavity 111 is provided with the locating blocks 1211 radially distributed on the inner wall of the cavity 111.

Exemplarily, the locating block 1211 is in an interference fit with the locating groove 1111, thereby achieving a fixed connection between the connecting segment 121 and the cavity 111.

In another example of the present embodiment, the connecting segment 121 is directly connected to the cavity 111 through an interference fit.

Referring to FIG. 1, FIG. 4, and FIG. 5, the outer tube 13 includes an accommodating cavity 131 extending through two ends of the outer tube 13 along an axial direction. The accommodating cavity 131 is coaxially arranged with the outer tube 13. The accommodating cavity 131 is configured to accommodate a part of the first shaft body 11, a part of the second shaft body 12, and a part of the limiting assembly 20. A fixing slot 132 is provided on the outer tube 13. The fixing slot 132 extends through a side of a tube wall of the outer tube 13 along a radial direction and communicates with the accommodating cavity 131. The limiting assembly 20 is mounted in the fixing slot 132 and the accommodating cavity 131. Installation space for the limiting assembly 20 may be enlarged by the fixing slot 132, so that an overall volume may be reduced while ensuring functionality of the limiting assembly 20. No extra volume or space occupation of the shaft assembly 10 is added, facilitating the arrangement of the entire steering control mechanism within the vehicle.

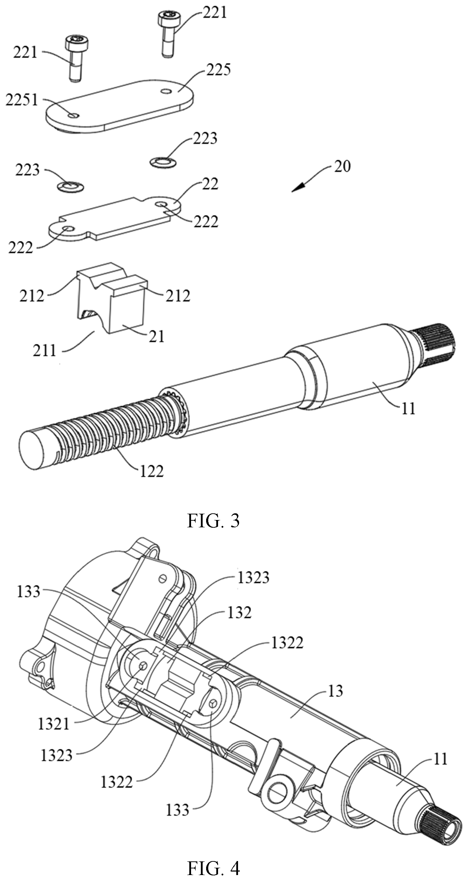

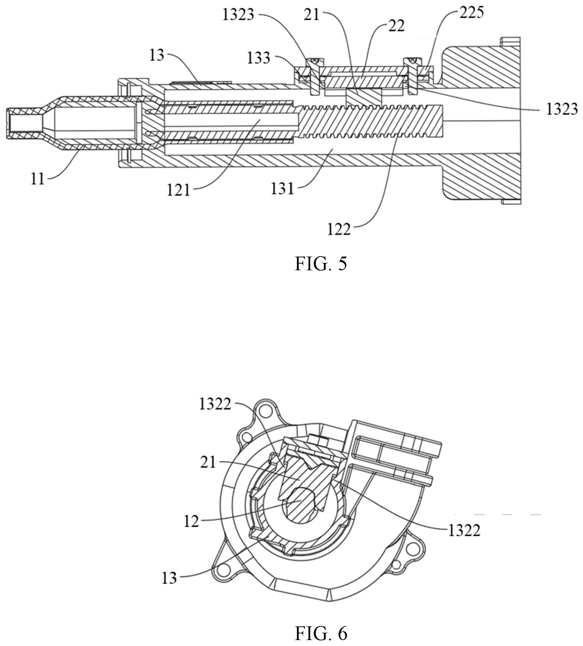

Referring to FIG. 3 and FIG. 5, the limiting assembly 20 includes a first guide member 21 and a second guide member 22 arranged along a radial direction. The first guide member 21 is arranged between the transmission segment 122 and the second guide member 22. The first guide member 21 is mounted in the fixing slot 132. An end, closer to the transmission segment 122, of the first guide member 21 passes through the fixing slot 132 and is located within the accommodating cavity 131. The first guide member 21 cooperates with the transmission segment 122. When the second shaft body 12 rotates around an axial direction, the first guide member 21 moves along the axial direction relative to the second guide member 22.

In an example, referring to FIG. 2, FIG. 3, and FIG. 5, an end, closer to the transmission segment 122, of the first guide member 21 is provided with a first thread. An outermost surface, along a radial direction, of the transmission segment 122 is provided with a second thread. Transmission between the first guide member 21 and the transmission segment 122 is achieved through a thread engagement between the first thread and the second thread. When the second shaft body 12 rotates around the axial direction, the transmission segment 122 may drive the first guide member 21 to move along the axial direction under cooperation of the second guide member 22.

Exemplarily, as shown in FIG. 3, an end, closer to the transmission segment 122, of the first guide member 21 is provided with a cutting groove 211 extending through the first guide member 21 along an axial direction. A shape of the cutting groove 211 conforms with the outermost surface, in the radial direction, of the transmission segment 122, thereby ensuring a tight fit between the first guide member 21 and the transmission segment 122 without interfering with the rotational movement of the transmission segment 122, thus ensuring a smooth rotation of the second shaft body 12.

Exemplarily, the cutting groove 211 is a C-shaped groove, that is, an orthogonal projection of the cutting groove 211 in the axial direction is C-shaped.

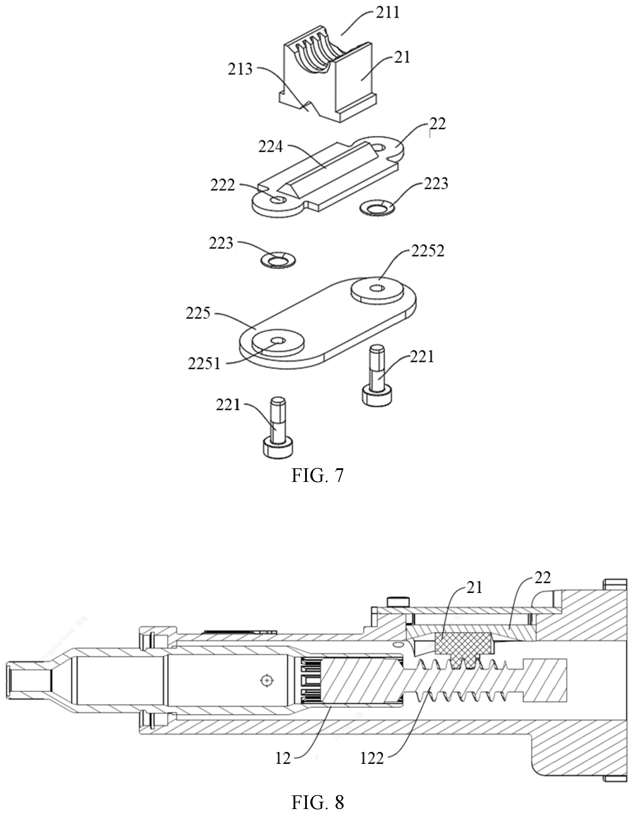

In another example, as shown in FIG. 8, an end, closer to the transmission segment 122, of the first guide member 21 is provided with a first tooth member. An outermost surface, along a radial direction, of the transmission segment 122 is provided with a second tooth member. Transmission between the first guide member 21 and the transmission segment 122 is achieved through a threaded engagement between the first tooth member and the second tooth member. When the second shaft body 12 rotates around the axial direction, the transmission segment 122 may drive the first guide member 21 to move along an axial direction under cooperation of the second guide member 22.

In an example of the present embodiment, referring to FIG. 3 and FIG. 4, two ends, perpendicular to the axial direction, of the first guide member 21 are provided with clamping pieces 212. The fixing slot 132 is provided with a support platform 1322 cooperating with the clamping piece 212. When the first guide member 21 is mounted to the fixing slot 132, the clamping piece 212 is located on the support platform 1322. The first guide member 21 is clamped between the support platform 1322 and the second guide member 22. Through the fit between the support platform 1322 and the clamping piece 212, the stability of movement along the axial direction of the first guide member 21 may be ensured.

Referring to FIG. 4, FIG. 5, and FIG. 6, two ends, along an axial direction, of the fixing slot 132 are provided with limiting blocks 1323 cooperating with the support platform 1322. The limiting block 1323 is configured to provide axial-directional limitation for the first guide member 21. When the first guide member 21 moves in the axial direction through transmission of the transmission segment 122, an end face of the clamping piece 212 along the axial direction may contact with the limiting block 1323. The limiting block 1323 is configured to limit the movement of the first guide member 21 in the axial direction.

When the user applies an external force to the steering wheel, the second shaft body 12 is driven to rotate around the axial direction. The first guide member 21 may be driven to move along the axial direction through transmission between the transmission segment 122 and the first guide member 21. When the clamping piece 212 is in contact with the limiting block 1323, the steering wheel rotates to a limit position. That is, the steering wheel may no longer continue to rotate in the same direction. When the steering wheel rotates counterclockwise until the clamping piece 212 is contacted with the limiting block 1323, the steering wheel may not continue to rotate counterclockwise but can rotate clockwise. When the steering wheel rotates clockwise until the clamping piece 212 is contacted with the limiting block 1323 again, the steering wheel may not continue to rotate clockwise. Thus, a quantity of rotations of the steering wheel is limited.

Exemplarily, the limiting block 1323 is integrally formed with the fixing slot 132.

Exemplarily, the first guide member 21 is made of a nylon material to reduce the noise generated when the first guide member 21 contacts and collides with the limiting block 1323, thereby enhancing the user experience and improving the NVH (Noise, Vibration, Harshness) performance of the entire transmission control mechanism.

Exemplarily, referring to FIG. 4 and FIG. 5, two ends, along the axial direction, of the fixing slot 132 are provided with limiting grooves 133 communicating with the fixing slot 132, and a dimension of two ends, perpendicular to the axial direction, of the limiting groove 133 (i.e., a width) is less than a width of the fixing slot 132. A step is formed at a junction between the fixing slot 132 and the limiting groove 133. When the clamping piece 212 moves to this step, the clamping piece 212 may not continue to move. The limiting block 1323 is formed by this step.

Exemplarily, the limiting groove 133 is arranged as a circular groove, and the fixing slot 132 is arranged as a square groove (or rectangular groove). The second guide member 22 conforms with the fixing slot 132 and the limiting groove 133. Thus, the second guide member 22 may be mounted in place in one go, reducing time cost for repeatedly adjusting position and thereby improving installation efficiency.

In an example of the present embodiment, referring to FIG. 3 and FIG. 7, an end, closer to the second guide member 22, of the first guide member 21 is provided with a guide groove 213, and an end, closer to the first guide member 21, of the second guide member 22 is provided with a guide strip 224. The guide strip 224 slidably engages with the guide groove 213. When the first guide member 21 moves along the axial direction, the guide strip 224 slides along the axial direction within the guide groove 213. Thus, the stability of the movement of the first guide member 21 along the axial direction may be ensured.

In another example of the present embodiment, an end, closer to the second guide member 22, of the first guide member 21 is provided with a guide strip 224, and an end, closer to the first guide member 21, of the second guide member 22 is provided with a guide groove 213. The guide strip 224 slidably engages within the guide groove 213. When the first guide member 21 moves along the axial direction, the guide strip 224 slides along the axial direction within the guide groove 213. Thus, the stability of the movement of the first guide member 21 along the axial direction may be ensured.

Exemplarily, the guide groove 213 is arranged as a V-shaped groove, and the guide strip 224 is arranged as a V-shaped strip. Of course, the guide groove 213 and the guide strip 224 may also be arranged in other shapes.

The second guide member 22 is mounted in the fixing slot 132. The second guide member 22 includes a preloading member configured to apply a force in the radial direction on the first guide member 21, enabling the first guide member 21 to have a tendency to move closer to the transmission segment 122 in the radial direction, thereby ensuring tight engagement between the first thread and the second thread, eliminating any backlash between the first thread and the second thread, preventing the first guide member 21 and the transmission segment 122 from becoming loose to lead to transmission failure.

In an example of the present embodiment, referring to FIG. 3 and FIG. 4, the preloading member includes a fastener 221. The fixing slot 132 is provided with a first fastening hole 1321, and the second guide member 22 is provided with a second fastening hole 222 corresponding to the first fastening hole 1321. The fastener 221 is mounted in the first fastening hole 1321 and the second fastening hole 222, to mount the second guide member 22 in the fixing slot 132. The second guide member 22 is pressed tightly by a force in the radial direction and closer to the transmission segment 122 applied by the fastener 221, thereby providing a preload to the first guide member 21, enhancing a meshing effect between the first guide member 21 and the transmission segment 122.

It is understandable that, in an example, when two ends of the fixing slot 132 are provided with the limiting grooves 133, as shown in FIG. 4, the first fastening hole 1321 may be provided within the limiting groove 133.

Exemplarily, the first fastening hole 1321 and the second fastening hole 222 are arranged as threaded holes, and the fastener 221 is arranged as a bolt.

Exemplarily, the fastener 221 is arranged as a rivet to provide a preload force to the first guide member 21 through a riveting process.

In an example of the present embodiment, referring to FIG. 3 and FIG. 4, the preloading member may further include an elastic member 223 arranged between the fastener 221 and the second guide member 22. The fastener 221 passes through the elastic member 223 to mount the second guide member 22 within the fixing slot 132. The fastener 221 is tightened to apply a force in the radial direction to the elastic member 223, causing the elastic member 223 to deform. The elastic member 223 generates a continuous restoring force in the radial direction on the second guide member 22 and the first guide member 21, thereby ensuring a normal, stable, and continuous transmission between the first guide member 21 and the transmission segment 122. Particularly, in threaded transmission, long-term meshing can lead to thread wear, thereby affecting transmission efficiency. The presence of the elastic member 223 continuously provides a restoring force, thereby ensuring transmission efficiency to a great extent and enhancing the NVH performance of the entire transmission control mechanism.

Exemplarily, the elastic member 223 may be a disc spring.

In an example of the present embodiment, referring to AIG. 1, FIG. 3, and FIG. 4, the preloading member may further include a cover cap 225 arranged on a side, facing away from the first guide member 21, of the second guide member 22 in the radial direction, and configured to enclose the second guide member 22 into the fixing slot 132 and the limiting groove 133. The cover cap 225 is configured to increase the preload that the second guide member 22 applies to the first guide member 21, and conceals traces of the fixing slot 132 and the limiting groove 133 provided on the outer tube 13, thereby ensuring integrity of the overall structure of the outer tube 13, enhancing the overall aesthetics and preventing dust and other contaminants from entering the fixing slot 132 and the limiting groove 133, which may have an impact on the functionality.

Exemplarily, the cover cap 225 is provided with a third fastening hole 2251 cooperating with the fastener 221. The fastener 221 is configured to mount and fix the cover cap 225, the elastic member 223, and the second guide member 22.

Exemplarily, the third fastening hole 2251 may be a threaded hole.

As shown in FIG. 7, an end, closer to the second guide member 22, of the cover cap 225 is provided with a projection 2252 arranged to cooperate with a position of the elastic member 223. The elastic member 223 is arranged between the cover cap 225 and the second guide member 22. Through the projection 2252, a clamping force in the radial direction may be applied to the elastic member 223, ensuring stable deformation of the elastic member 223.

It is understandable that, by adjusting a dimension of the first guide member 21 along the axial direction, and/or adjusting a dimension of the fixing slot 132 along the axial direction, and/or adjusting the dimension of the second guide member 22 along the axial direction, the quantity of rotations of the steering wheel may be changed to meet different requirements.

In an example of the present embodiment, the second guide member 22 may be welded within the fixing slot 132 and the limiting groove 133.

In view of above, the transmission between the limiting assembly 20 and the steering wheel is achieved through the first shaft body 11 and the second shaft body 12. By mounting at least part of the limiting assembly 20 in the outer tube 13, a volume of an entire control mechanism may be reduced, making the overall footprint small and conducive to layout in the vehicle space. The limiting assembly 20 may limit the quantity of rotations of the steering wheel, enhancing the user experience of the entire control system.

The foregoing descriptions are merely specific embodiments of the present disclosure, rather than limiting the protection scope of the present invention. Any changes or substitutions that can be easily conceived by those skilled in the art within the scope of the technology disclosed in this application should be covered by the scope of protection of the present disclosure. Therefore, the scope of protection of the present disclosure should be determined by the protection scope of the claims.

## Claims

1. A vehicle steering control mechanism, comprising a shaft assembly (10) and a limiting assembly (20), wherein the shaft assembly (10) comprises a first shaft body (11), a second shaft body (12) and an outer tube (13), the first shaft body (11) is configured to connect to a steering wheel, the second shaft body (12) is coaxially connected to the first shaft body (11) and configured to move synchronously with the steering wheel, the second shaft body (12) is connected to the limiting assembly (20), the limiting assembly (20) is configured to limit a quantity of rotations of a steering wheel, the outer tube (13) is coaxially connected to the first shaft body (11) and the second shaft body (12), the second shaft body (12) is mounted in the outer tube (13), and at least part of the limiting assembly (20) is mounted in the outer tube (13).

2. The vehicle steering control mechanism according to claim 1, wherein the first shaft body (11) comprises a cavity (111), the second shaft body (12) comprises a connecting segment (121) and a transmission segment (122), the connecting segment (121) is mounted in the cavity (111), and the transmission segment (122) is configured to connect the first shaft body (11) and the limiting assembly (20).

3. The vehicle steering control mechanism according to claim 2, wherein the outer tube (13) comprises an accommodating cavity (131) and a fixing slot (132), the accommodating cavity (131) extends through two ends of the outer tube (13) along an axial direction, the fixing slot (132) extends through a side of a tube wall of the outer tube (13) along a radial direction and communicates with the accommodating cavity (131), and the limiting assembly (20) is mounted in the fixing slot (132) and the accommodating cavity (131).

4. The vehicle steering control mechanism according to claim 3, wherein the limiting assembly (20) comprises a first guide member (21) and a second guide member (22), the first guide member (21) and the second guide member (22) are mounted in the fixing slot, an end, closer to the transmission segment (122), of the first guide member (21) passes through the fixing slot (132) and is located within the accommodating cavity (131), and the first guide member (21) is configured to cooperate with the transmission segment (122) to move along the axial direction relative to the second guide member (22) when the second shaft body (12) rotates around the axial direction.

5. The vehicle steering control mechanism according to claim 4, wherein an end, closer to the transmission segment (122), of the first guide member (21) is provided with a first thread, an outermost surface, in the radial direction, of the transmission segment (122) is provided with a second thread, and the first thread engages with the second thread for transmission.

6. The vehicle steering control mechanism according to claim 4, wherein an end, closer to the transmission segment (122), of the first guide member (21) is provided with a first tooth member, an outermost surface, in the radial direction, of the transmission segment (122) is provided with a second tooth member, and the first tooth member engages with the second tooth member for transmission.

7. The vehicle steering control mechanism according to claim 4 or 5, wherein the end, closer to the transmission segment (122), of the first guide member (21) is provided with a cutting groove (211) extending through the first guide member (21) along the axial direction, and the cutting groove (211) is configured to cooperate with the outermost surface, in the radial direction, of the transmission segment (122).

8. The vehicle steering control mechanism according to any one of claims 4 to 7, wherein two ends, perpendicular to the axial direction, of the first guide member (21) are provided with clamping pieces (212), the fixing slot (132) is provided with a support platform (1322) cooperating with the clamping piece (212), and when the first guide member (21) is mounted to the fixing slot (132), the clamping piece (212) is in contact with the support platform (1322) and the clamping piece (212) is clamped between the support platform (1322) and the second guide member (22).

9. The vehicle steering control mechanism according to claim 8, wherein two ends, along the axial direction, of the fixing slot (132) are provided with limiting blocks (1323) cooperating with the support platform (1322), and when the first guide member (21) moves along the axial direction to a position in contact with the limiting block (1323), the steering wheel and the second shaft body (12) are rotated to a limit position.

10. The vehicle steering control mechanism according to claim 9, wherein the two ends, along the axial direction, of the fixing slot (132) are provided with limiting grooves (133) communicating with the fixing slot (132), a width of the limiting groove (133) is less than a width of the fixing slot (132), and the limiting block (1323) is formed at a junction between the fixing slot (132) and the limiting groove (133).

11. The vehicle steering control mechanism according to any one of claims 4 to 10, wherein one of the first guide member (21) and the second guide member (22) is provided with a guide groove (213), the other one of the first guide member (21) and the second guide member (22) is provided with a guide strip (224) cooperating with the guide groove (213), and when the first guide member (21) moves along the axial direction, the guide strip (224) slidably engages within the guide groove (213).

12. The vehicle steering control mechanism according to any one of claims 4 to 10, wherein the second guide member (22) comprises a preloading member, the preloading member is configured to apply a force in the radial direction on the first guide member (21), to enable the first guide member (21) to engage with the transmission segment (122).

13. The vehicle steering control mechanism according to claim 12, wherein the preloading member comprises a fastener (221), the fixing slot (132) is provided with a first fastening hole (1321), the second guide member (22) is provided with a second fastening hole (222), the fastener (221) is mounted in the first fastening hole (1321) and the second fastening hole (222) to apply a force in the radial direction on the second guide member (22) and the first guide member (21).

14. The vehicle steering control mechanism according to claim 13, wherein the preloading member comprises an elastic member (223) arranged between the fastener (221) and the second guide member (22), the fastener (221) is configured to pass through the elastic member (223) to mount the second guide member (22) in the fixing slot (132), the fastener (221) is configured to apply the force in the radial direction on the second guide member (22) and the first guide member (21), and the elastic member (223) is deformed and is configured to apply a force in the radial direction on the second guide member (22) and the first guide member (21).

15. The vehicle steering control mechanism according to claim 13 or claim 14, wherein the preloading member further comprises a cover cap (225) arranged on a side, facing away from the first guide member (21), of the second guide member (22) in the radial direction, and enclosing the second guide member (22) on the outer tube (13).
